# EUROPEAN PATENT SPECIFICATION

(11) **EP 1 524 871 B1**
(45) Date of publication and mention of the grant of the patent: **20.05.2009**
(21) Application number: 04024383.4
(22) Date of filing: 13.10.2004
(51) Int. Cl.: H04W 24/00

(54) **Apparatus for scanning WCDMA channels**
Vorrichtung zum Scannen von WCDMA-Kanälen
Dispositif pour scanner les canaux WCDMA

(30) Priority: 17.10.2003 KR 2003072668
(43) Date of publication of application: 20.04.2005
(73) Proprietor: LG Electronics Inc., Seoul (KR)
(72) Inventor: Yang, Man-Suk, Dongan-Gu, Ahnyang, Gyeonggi-Do (KR)
(74) Representative: Katérle, Axel

(56) References cited:
- EP-A1- 0 933 955
- WO-A-03/063538
- US-A- 5 896 572
- US-A- 5 930 720
- US-A1- 2003 022 670
- US-B1- 6 553 229

## Description

### BACKGROUND OF THE INVENTION

### 1. Field of the Invention

The present invention relates to a mobile communication system, and more particularly to, an apparatus for scanning a mobile communication channel, such as an intelligent Wideband Code Division Multiple Access (WCDMA) channel, allowing a mobile terminal to scan an optimized channel in a mobile communication network and a method therefore.

### 2. Description of the Related Art

A number of countries have adopted mobile communication systems, such as Wideband Code Division Multiple Access (WCDMA) network, for multimedia data transmission. As compared with other mobile communication systems, WCDMA network provides a high quality image service and a high data rate.

A mobile terminal, within a WCDMA network, performs a call or uses a data service through a channel (or frequency) allocated by a base station of a corresponding region. Manufacturers of mobile terminals use diverse methods to increase scanning efficiency for allocating channels. One method for increasing scanning efficiency includes scanning a specified fixed frequency band or an entire allocated frequency band within the WCDMA network. However, channels using different frequency bands, or other mobile communication provider networks are not scanned.

During peak traffic times, it may be desirable to handover signals to adjacent channels such as a channel in an unallocated frequency band. The handover to the unallocated frequency band (unscanned band) would introduce a communication delay (while the system determines channel availability). This delay may result in reduced quality of service to a user or a base station.

EP 0 933 955 A1 discloses a cellular radio system. A frequency use state notifying means generates a frequency use state information for notifying the mobile station of the use state of each radio frequency on the basis of channel occupancies determined by a channel occupancy monitoring means and transmits this information to the mobile station. The mobile station forms a radio frequency list in which priority levels are assigned to a plurality of radio frequencies on the basis of the frequency use state information before power-off and stores it in a power-off state. Immediately after power-on of the mobile station, a search is performed to check in the order of priority levels, whether the radio frequencies indicated by the radio frequency list stored in the storage means can be used and the first detected radio frequency that can be used is a candidate radio frequency to be used.

US 6,553,229 B1 relates to cellular radio telephones. The order for searching for different systems can be varied to using historical information and the order in which channels are searched for a single type of system can be prioritized using historical information. Such information can include for example that the phone has most often locked to a D-AMPS control channel on a first list of frequencies, an AMPS control channel on a second list of frequencies and/or a GSM control channel on a third list of frequencies. How often each frequency was selected in the past can be stored and those frequencies can be scanned first in the order of probability.

WO 03/063538 A1 relates to a mobile radio system. A spectral table consists of two tables. A first table is assigned for a rough scan and the second table is assigned to a fine scan. In the rough scan table eight frequencies are listed together with the maximal power and the percentage the channel is busy. Once the rough scan table is completed, the selection criterium, which assigns higher priorities to the frequencies with stronger blocks, forces the selection of frequencies in decreasing order of priority. Each fine scan table comprises eight sub-frequencies, wherein to each sub-frequency the power and the percentage during which the frequency was busy are assigned.

US 5,930,720 relates to a cordless telephone and discloses a method in which a priority order is assigned to each channel, and channels having higher priority order are progressively used, as well as a method in which that priority order is dynamically decided according to historical data concerning use of each channel.

US 5,896,572 discloses that a subscriber unit maintains a historical channel list, preferably a channel occupancy data base. The data base maintains a count of the number of times a specific channel and base ID was acquired, and the average time that the device occupied the channel following acquisition. Additionally the variance of the channel occupancy time can be maintained to provide a further refinement for the channel selection process.

### SUMMARY OF THE INVENTION

The invention provides an apparatus according to claim 1 and a method according to claim 17.

The present invention provides an apparatus and a method for scanning communication channels, such as an intelligent Wideband Code Division Multiple Access (WCDMA) channels, for determining availability for receiving and transmitting communication signals. A mobile terminal, for example, using the method and/or system disclosed, scans an optimized channel in a WCDMA network, which results in increased communication efficiency.

In one aspect, the communication channels are scanned according to priority established by an occupation number of the channel. The occupation number refers to the number of signals utilizing the channel. In another aspect, the communication channels are scanned according to priority established by a frequency ranking of selected channel.

In yet another aspect, an apparatus scans an intelligent WCDMA channel, including a baseband unit, a table unit, a control unit, and a radio frequency unit. The baseband unit processes baseband signals transmitted or received by a mobile terminal. The table unit provides a table of all channels allocated to a WCDMA system, and records and stores occupation numbers of each channel. The control unit scans the channel having a highest occupation number stored as data in the table unit, and selects a communication channel according to priority. The control unit selects the radio frequency unit for transmitting or receiving communication signals through the channel.

In another aspect, a method for scanning an intelligent WCDMA channel includes: selecting a frequency group having highest priority, scanning sequentially channels which composes the frequency group according to priority, deciding whether and when an channel that is available exists in the frequency group, and performing communication through the channel.

In another aspect, the table unit forms the frequency group by arranging the allocated channels into 5 MHz intervals, accumulating and storing the occupation numbers of each channel, and storing an updated priority of the frequency group.

In another aspect, the control unit receives the data from the table unit, selects the frequency group having priority that is the highest, and scans the channels of the selected frequency group according to the priority. The control unit confirms an occupation state of the scanned channel, occupies, registers the channel with, for example, a base station for use when available, and transmits and/or receives communication signals through the channel upon receiving a data communication request, for example, by a user.

In yet another aspect, priority is determined by accumulating and storing an occupation number for each of the channels. The priority of a frequency group is stored according to the occupation number. The occupation numbers are accumulated for each channel. When the accumulation of occupation numbers reaches a predetermined upper limit value, the occupation numbers are reduced at a predetermined ratio and the priority of the channels is updated.

The foregoing and other objects, features, aspects and advantages of the present invention will become more apparent from the following detailed description of the present invention when taken in conjunction with the accompanying drawings.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

Features, elements, and aspects of the invention that are referenced by the same numerals in different figures represent the same, equivalent, or similar features, elements, or aspects in accordance with one or more embodiments. In the drawings:
Fig. 1 is a structure view illustrating an apparatus for scanning an intelligent WCDMA channel in accordance with the present invention.
Fig. 2 is a view illustrating one example of a table created by the apparatus for scanning the intelligent WCDMA channel in accordance with the present invention.
Fig. 3 is a view illustrating another example of the table created by the apparatus for scanning the intelligent WCDMA channel in accordance with the present invention.
Fig. 4 is a flowchart showing sequential steps of a method for scanning an intelligent WCDMA channel in accordance with the present invention.
Fig. 5 is a flowchart showing sequential steps of a method for setting priority of channels in accordance with the present invention.
FIG. 6 is a block diagram illustrating a mobile communications device of an embodiment of the present invention.
FIG. 7 is a block diagram illustrating a UTRAN according to an embodiment of the present invention.

### DETAILED DESCRIPTION

References are made in detail to the preferred embodiments of the present invention, examples of which are illustrated in the accompanying drawings. An apparatus for scanning an intelligent WCDMA channel and a method therefor in accordance with the preferred embodiments of the present invention will now be described in detail with reference to the accompanying drawings. Well-known functions or constructions are not described in detail since they would obscure the invention in unnecessary detail.

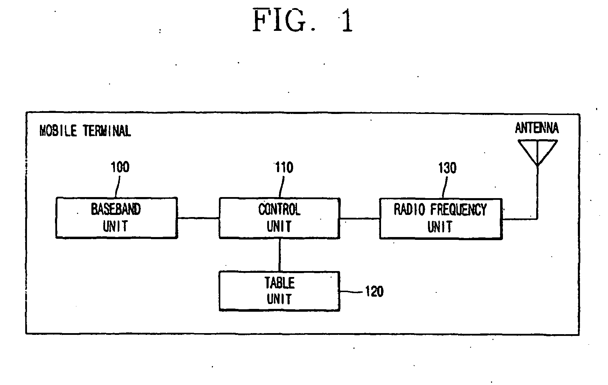

Fig. 1 is a structure view illustrating the apparatus for scanning the intelligent WCDMA channel. The apparatus for scanning an intelligent WCDMA channel which includes a baseband unit 100, a table unit 120, a control unit 110, and a radio frequency unit 130.

The baseband unit 100 processes baseband signals transmitted or received by a mobile terminal. The baseband signals are, for example, voice, characters, symbols, or image signals.

The table unit 120 provides a table of channels allocated to a WCDMA system. The channels are communication channels for transmitting and receiving signals. An occupation number is assigned to each channel. The occupation number is the total number of signals occupying a channel. The table unit 120 records and stores the occupation numbers of each channel. The table unit 120 arranges in 5 MHz intervals the allocated channels to form a frequency group. The occupation number for each channel is accumulated and stored by the table unit 120. The table unit 120 stores priority that signals are assigned for the frequency group. A highest occupation number, for example, is assigned to a channel that is the least occupied by signals. The least occupied channel, in this example, has the highest priority to receive and/or to transmit signals.

The control unit 110 scans for a channel having the highest occupation number in the table unit 120. The control unit 110 receives the data from the table unit 120, selects a frequency group having the highest priority, scans the channels of the selected frequency group according to priority, and confirms an operational state (such as available or not available). If the scanned channel is available, the channel is selected (registered). The radio frequency unit 130 transmits or receives signals through the selected channel.

The accumulated occupation number is increased for the scanned channel and the data is updated in the table unit 120. If the occupation number of the channel reaches a predetermined upper limit value, the control unit 110 reduces the accumulated occupation number of the channel stored in the table unit 120 by a predetermined ratio, and updates the priority.

If the occupation numbers of three channels are 49, 25 and 10, for example, and the upper limit value is 50, the first channel is re-occupied so that its occupation number can reach 50; the control unit 110 reduces the accumulated occupation numbers of the channels.

Other methods can be used to reduce the occupation numbers of the channels. For example, the occupation numbers of the channels can be reduced by '1' or divided by '5'. When it is presumed that the occupation numbers of the channels are reduced by '10', the occupation number of the third channel becomes '0'. Accordingly, the third channel is not scanned, which increases a scanning speed.

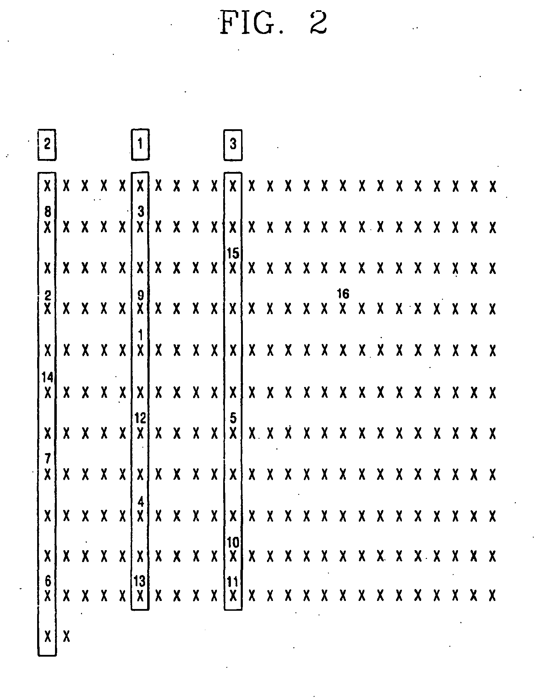

Fig. 2 is a view illustrating one example of a table created by the table unit.

As shown in Fig. 2, X denotes each channel, and numbers over X denote priority or frequency ranking for selecting channels. In addition, columns of each channel represent frequency groups, and the uppermost numbers 1, 2 and 3 represent priority in which the frequency groups are selected.

'8' is shown on the second row of the first column in which priority of the frequency group is '2'. Thus, the priority or frequency ranking of the corresponding channel is '8'. In the same manner, the priority or frequency ranking of the channel of the fourth row of the first column is '2', of the sixth row is '14', of the eighth row is '7', and of the eleventh row is '6'.

In one example, the channel having the smallest number is the channel having the highest priority or frequency ranking, and the channel having the large number is the channel having the low priority or frequency ranking. Therefore, the channel whose priority or frequency ranking is '2' is the channel having the highest priority or frequency ranking, and the channel whose priority or frequency ranking is '14' is the channel having the lowest priority or frequency ranking. That is, the priority or frequency ranking of the frequency group of priority 2 is 2 **→** 6 **→** 7 **→** 8 **→** 14.

In another example, priority or frequency ranking of the second channel of the sixth column in which priority of the frequency group is '1' is '3', of the fourth channel is '9', of the fifth channel is '1', of the seventh channel is '12', of the ninth channel is '4', and of the eleventh channel is '13'. In summary, the priority or frequency ranking is 1 **→** 3 **→** 4 **→** 9 **→** 12 **→** 13.

Priority or frequency ranking of the third, seventh, tenth and eleventh channels of the eleventh column in which priority of frequency group is '3' is '15', '5', '10' and '11', respectively. The priority or frequency ranking becomes 5 **→** 10 **→** 11 **→** 15.

If one frequency group is selected from the table, channels are scanned according to priority or frequency ranking of the frequency group.

For example, when the frequency group of priority 2 is selected, the channel whose priority or frequency ranking of '2' is scanned first and availability of the scanned channel is confirmed. If the channel is available, the channel is occupied so that communication signals can be transmitted or received through the channel.

If not available, the channel of priority '6' is scanned. The '6' channel is scanned for availability. If '6' channel is available, it is occupied so that communication signals can be transmitted or received through the channel.

If the channel is unavailable, the channels, in this example, are sequentially scanned; namely, channel corresponding to ranking '7', then if fully occupied then to ranking '8', then if still fully occupied, then to channel ranking '14'.

If the channels of the frequency group of priority 2 are not available, then channels of the frequency group corresponding to the second highest priority are scanned using a similar methodology as discussed above.

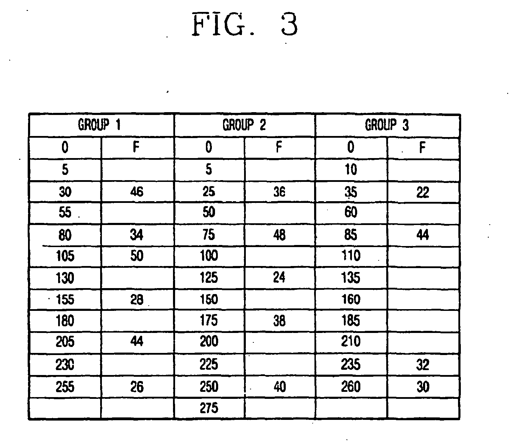

Fig. 3 is a view illustrating another example of the table created by the table unit.

As illustrated in Fig. 3, O denotes offset values of each channel recorded on the table unit, and F denotes frequencies in which the corresponding channels are selected.

In general, the radio frequency band allocated to the WCDMA system ranges from 2110MHz to 2170MHz. An interval between the frequency bands allocated to each channel is set 200KHz for reduce channel interferences. In this example, the channel frequencies are 2112.4MHz, 2112.6MHz, 2112.8MHz, ..., 2167.4MHz and 2167.6MHz which resulting in 277 possible channels.

Universal Terrestrial Radio Access (UTRA) Absolute Radio Frequency Channel Number (UARFCN) is assigned to each frequency band. The UARFCN is obtained by multiplying each channel frequency by '5' resulting in values ranges from '10562' (obtained by multiplying channel frequency '2112.4' by '5') to '10838' (obtained by multiplying channel frequency '2167.6' by '5').

The offset values represent offsets starting from UARFCN 10562. If the offset value is '5', the UARFCN is '10567' obtained by adding the offset value '5' to '10562'. If the offset value is '30', the UARFCN is '10592' obtained by adding '30' to '10562'. If the offset value is '80', the UARFCN is '10562+80', namely '10642, and the corresponding frequency is '10642/5', namely 2124.4MHz. In this example, the table unit utilizes the offset values, but alternatively may also use the UARFCN or frequencies.

Values of the frequencies are updated until the values reach the upper value limit. In case channels are not selected by using the stored channel information, the frequencies are used to decide priority of the channel scanning process.

Priority of the groups is decided by selecting the channel having the highest frequency, namely the highest priority in each group, and comparing the selected channels. In Group 1, the channel having O of 105 has the highest frequency, 50. In Group 2, the channel having O of 75 has the highest frequency, 48. In Group 3, the channel having O of 85 has the highest frequency, 44.

When priority of the channels having the highest frequencies in each group is decided, Group 1 has the highest priority and Group 3 has the lowest priority. Accordingly, the priority is decided as Group 1 **→** Group 2 **→** Group 3.

After the priority of the groups is decided, channels of the group having the high priority are scanned first. In this example, Group 1 has the highest priority, the channel having the highest frequency in Group 1 is scanned first. If the available channel exists, the channel is occupied and used for communication. However, if after all the channels having the highest frequency to the lowest frequency in Group 1 all have been scanned, the available channel does not exist, channels of the group having the second highest priority are scanned. The channels allocated to the system are scanned according to priority until the available channel is scanned.

Therefore, the channels can be rapidly efficiently scanned even if channel information is not stored, and the optimized frequencies can be scanned in each region and each mobile communication provider.

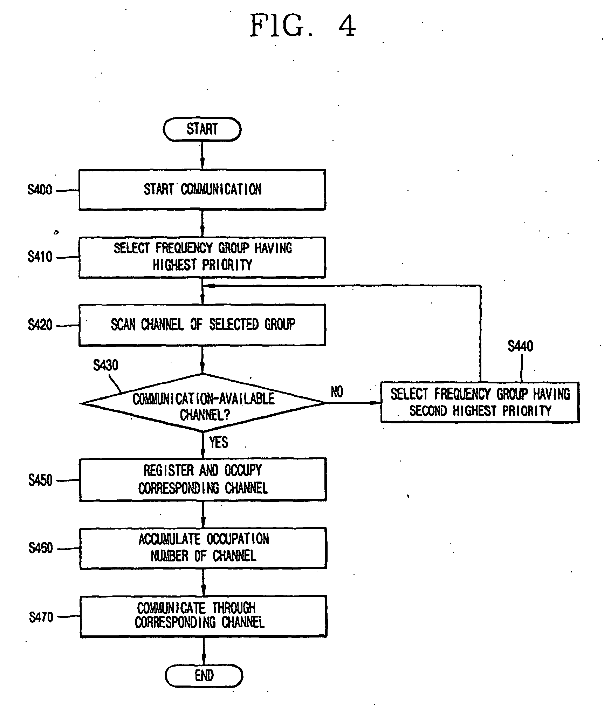

Fig. 4 is a flowchart showing sequential steps of a method for scanning an intelligent WCDMA channel in accordance with the present invention. When the mobile terminal starts communication (S400), the mobile terminal (control unit of the mobile terminal) selects the frequency group having the highest priority by searching the data of the table unit (S410). The mobile terminal sequentially scans the channels of the selected frequency group according to priority (S420). During the scanning process, the mobile terminal checks whether the communication-available channel exists (S430).

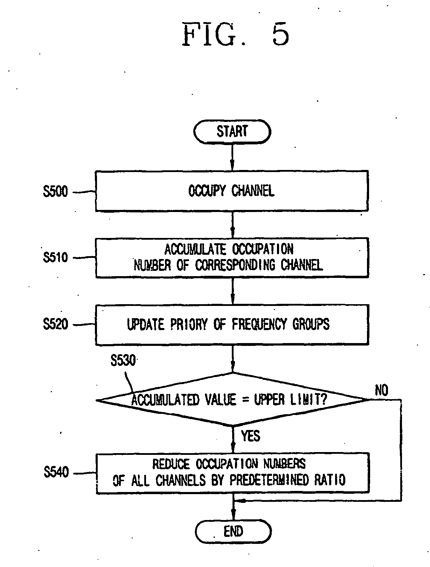

If the communication-available channel does not exist, the mobile terminal selects the frequency group having the second highest priority, and repeats the above procedure (S420 to S430) (S440). If the communication-available channel exists, the mobile terminal occupies the corresponding channel by registering the channel in the base station (S450). After occupying the channel, the mobile terminal accumulates the occupation number of the channel, stores the accumulated number as data (S460), and uses the communication service through the channel (S470). A method for setting priority of channels will be explained with reference to Fig. 5 below.

Fig. 5 is a flowchart showing sequential steps of the method for setting priority of the channels. When the mobile terminal firstly occupies the channel for communication (S500), the mobile terminal (control unit of the mobile terminal) accumulates the occupation number of the channel, and stores the accumulated number in the table unit as data (S510). The mobile terminal updates priority of each frequency group according to the occupation number and stores the priority in the table unit as data (S520). Thereafter, the mobile terminal decides whether the accumulated occupation number reaches an upper limit value (S530).

If the accumulated occupation number reaches the upper limit value, the mobile terminal reduces the accumulated occupation numbers of the channels by a predetermined ratio, and updates the priority (S540). As discussed earlier, the apparatus for scanning the intelligent WCDMA channel and the method thereof rapidly efficiently scan and occupy the channel in consideration of priority of the frequency groups and the channels in each region or each mobile communication provider.

In addition, the apparatus for scanning the intelligent WCDMA channel and the method thereof reduce load of the system and improve reliability of the service, by scanning and occupying the optimized channel by updating priority of the used channels.

Moreover, the apparatus for scanning the intelligent WCDMA channel and the method thereof may improve quality and speed of the communication service by rapidly scanning the channels.

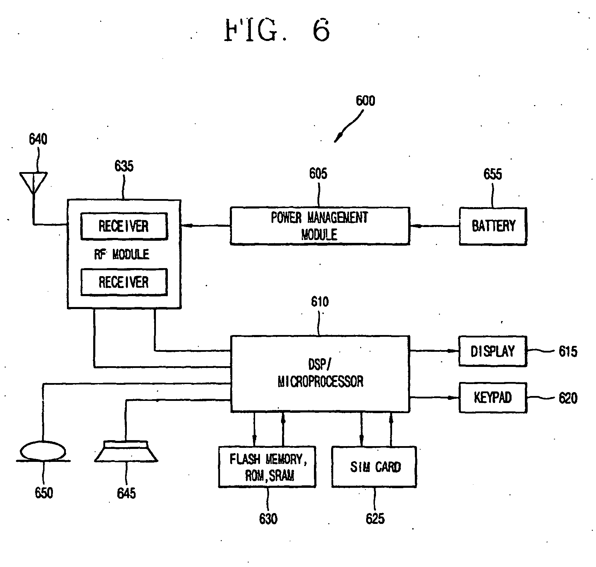

Referring to FIG. 6, a block diagram of a mobile communication device 600 of the present invention such as a mobile phone for performing the methods of the present invention. The mobile communication device 600 includes a processing unit 610 such as a microprocessor or digital signal processor, an RF module 635, a power management module 606, an antenna 640, a battery 655, a display 615, a keypad 620, a storage unit 630 such as flash memory, ROM or SRAM, a speaker 645 and a microphone 650.

A user enters instructional information, such as a telephone number, for example, by pushing the buttons of a keypad 620 or by voice activation using the microphone 650. The processing unit 610 receives and processes the instructional information to perform the appropriate function, such as to dial the telephone number. Operational data may be retrieved from the storage unit 630 to perform the function. Furthermore, the processing unit 610 may display the instructional and operational information on the display 615 for the user's reference and convenience.

The processing unit 610 issues instructional information to the RF module 635, to initiate communication, for example, transmit radio signals comprising voice communication data. The RF module 635 comprises a receiver and a transmitter to receive and transmit radio signals. The antenna 640 facilitates the transmission and reception of radio signals. Upon receiving radio signals, the RF module 635 may forward and convert the signals to baseband frequency for processing by the processing unit 610. The processed signals would be transformed into audible or readable information outputted via the speaker 645, for example.

The processing unit 610 is adapted to perform the methods as illustrated above in the discussions related to Figures 1 and 2. As an example, the processing unit 610 is adapted to selecting a frequency group wherein availability of the frequency group to receive or transmit signals is stored as an occupation number; sequentially scanning channels composing the frequency group according to the priority; deciding whether a channel that is available exists within the frequency group; performing communication through the channel when available. Other features, as described above in Figures 1 and 2, may be incorporated into the processing unit 610.

The processing unit 610 stores the messages received from and messages transmitted to other users in the storage unit 630, receive a conditional request for message input by the user, process the conditional request to read message data corresponding to the conditional request from the storage unit, and output the message data to the display unit 615. The storage unit 630 is adapted to store message data of the messages both received and transmitted.

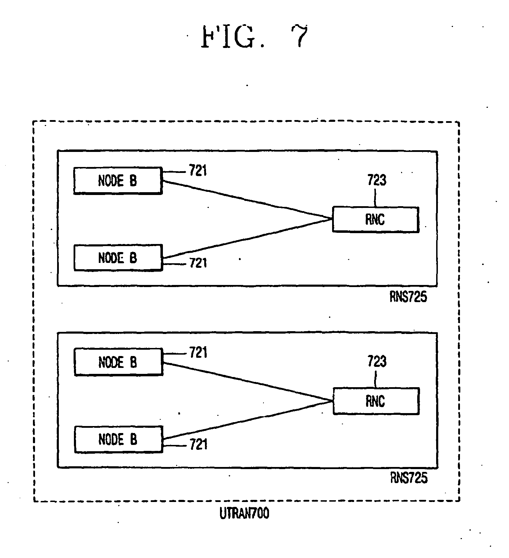

FIG. 7 illustrates a block diagram of a UTRAN 700 according to the preferred embodiment of the present invention. The UTRAN 700 includes one or more radio network sub-systems (RNS) 725. Each RNS 725 includes a radio network controller (RNC) 723 and a plurality of Node-Bs (base stations) 721 managed by the RNC. The RNC 723 handles the assignment and management of radio resources and operates as an access point with respect to the core network. Furthermore, the RNC 723 is adapted to perform the methods of the present invention.

The Node-Bs 721 receive information sent by the physical layer of the terminal through an uplink, and transmit data to the terminal through a downlink. The Node-Bs 721 operate as access points, or as a transmitter and receiver, of the UTRAN 700 for the terminal. It will be apparent to one skilled in the art that the mobile communication device 600 (of the Figure 6) may be readily implemented using, for example, the processing unit 610 (of the Figure 6) or other data or digital processing device, either alone or in combination with external support logic.

By utilizing the present invention, the user of a mobile communication device may scan channels in a mobile communication system based on priority which determines eligibility of a channel to receive or to transmit a communication signal, as described above in Figures 1 and 2. For example, the controller may select a frequency group wherein availability of the frequency group to receive or transmit signals is stored as an occupation number; sequentially scanning channels composing the frequency group according to the priority; deciding whether a channel that is available exists within the frequency group; and performing communication through the channel when available. It will be apparent to one skilled .in the art that the preferred embodiments of the present invention can be readily implemented using, for example, the processing unit 610 (of Figure 6) or other data or digital processing device, either alone or in combination with external support logic.

Although the present invention is described in the context of mobile communication, the present invention may also be used in any wireless communication systems using mobile devices, such as PDAs and laptop computers equipped with wireless communication capabilities. Moreover, the use of certain terms to describe the present invention should not limit the scope of the present invention to certain type of wireless communication system, such as UMTS. The present invention is also applicable to other wireless communication systems using different air interfaces and/or physical layers, for example, TDMA, CDMA, FDMA, WCDMA, etc.

The preferred embodiments may be implemented as a method, apparatus or article of manufacture using standard programming and/or engineering techniques to produce software, firmware, hardware, or any combination thereof. The term "article of manufacture" as used herein refers to code or logic implemented in hardware logic (e.g., an integrated circuit chip, Field Programmable Gate Array (FPGA), Application Specific Integrated Circuit (ASIC), etc.) or a computer readable medium (e.g., magnetic storage medium (e.g., hard disk drives, floppy disks, tape, etc.), optical storage (CD-ROMs, optical disks, etc.), volatile and non-volatile memory devices (e.g., EEPROMs, ROMs, PROMS, RAMs, DRAMs, SRAMs, firmware, programmable logic, etc.).

Code in the computer readable medium is accessed and executed by a processor. The code in which preferred embodiments are implemented may further be accessible through a transmission media or from a file server over a network. In such cases, the article of manufacture in which the code is implemented may comprise a transmission media, such as a network transmission line, wireless transmission media, signals propagating through space, radio waves, infrared signals, etc. Of course, those skilled in the art will recognize that many modifications may be made to this configuration without departing from the scope of the present invention, and that the article of manufacture may comprise any information bearing medium known in the art.

The logic implementation shown in the figures described specific operations as occurring in a particular order. In alternative implementations, certain of the logic operations may be performed in a different order, modified or removed and still implement preferred embodiments of the present invention. Moreover, steps may be added to the above described logic and still conform to implementations of the invention.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

As the present invention may be embodied in several forms without departing from the spirit or essential characteristics thereof, it should also be understood that the above-described embodiments are not limited by any of the details of the foregoing description, unless otherwise specified, but rather should be construed broadly as defined in the appended claims. Therefore all changes and modifications that fall within the metes and bounds of the claims, or equivalence of such metes and bounds are therefore intended to be embraced by the appended claims.

## Claims

1. An apparatus for scanning channels in a mobile communication system based on priority associated with an occupancy number indicating the number of signals using a channel to determine availability of the channel, comprising:
a baseband unit (100) for processing a signal;
a table unit (120) electrically coupled to the baseband unit for creating a table of channels, which stores an occupancy number in the table of channels, and establishes priority for occupying a channel with the signal; and
a control unit (110) electrically coupled to the table unit for scanning the table of channels according to the occupancy number and selecting a channel having the occupancy number with a highest priority for receiving or transmitting a signal,
**characterized in that**, if the occupancy number of the channel that has been scanned reaches an upper limit value, the control unit reduces by a predetermined ratio, the occupancy number of the corresponding channel stored in the table unit, and updates the priority of the channels.

2. An apparatus of claim 1, further comprising a radio frequency unit (130) electrically coupled to the control unit for transmitting or receiving communication signals through the channel with the highest priority.

3. The apparatus of claim 1 or 2, wherein the channels are Wideband Code Division Multiple Access (WCDMA) channels.

4. The apparatus of any one of claims 1 to 3, wherein the table of channels records and stores the occupancy number for transmitted or received signals.

5. The apparatus of any one of claims 1 to 4, further including a mobile terminal electrically coupled to the baseband unit adapted for a user to request a data communication.

6. The apparatus of any one of claims. 1 to 5, wherein the table of channels is arranged from a highest occupied channel to a lowest occupied channel, which arrangement of the channels establishes the priority, by which the channels receive and transmit communication signals.

7. The apparatus of any one of claims 1 to 6, wherein the control unit accumulates the occupancy number of each channel for determining the priority of each channel for receiving or to transmitting communication signals.

8. The apparatus of any one of claims 1 to 7, wherein the control unit reduces accumulation of the occupancy numbers of the channels when the channel having a highest priority reaches a predetermined upper limit value based on the capacity of the channel.

9. The apparatus of any one of claims 1 to 8, wherein the table unit forms a frequency group having channels, and accumulates and stores the occupancy number of the channels of the frequency group.

10. The apparatus of any one of claims 1 to 9, wherein the channels are arranged at 5 MHz intervals.

11. The apparatus of any one of claims 1 to 10, wherein the table unit stores the priority of a frequency group, and upon occupation of a channel within the frequency group, the control unit updates priority of the selected frequency group.

12. The apparatus of claim 11, wherein the control unit receives data from the table unit, selects the frequency group having the highest priority, and scans the channels of the selected frequency group determining availability to transmit or receive signals.

13. The apparatus of any one of claims 1 to 12, wherein the channels are scanned according to the priority for receiving or transmitting signals.

14. The apparatus of any one of claims 1 to 13, wherein the priority is determined according to the occupancy number or frequencies of the channel.

15. The apparatus of any one of claims 1 to 14, further including a radio frequency unit electrically coupled to the control unit, wherein the control unit confirms an operational state of the scanned channel, selects the channel for occupying it based on its availability, and controls the signals received or transmitted by the radio frequency unit.

16. The apparatus of any one of claims 1 to 15, wherein the control unit accumulates the occupancy number of the channels, stores the occupancy numbers in the table unit, selects the channel, and updates the priority associated with the occupancy number or a frequency group of the selected channel.

17. A method for a mobile communication system for scanning channels in a mobile terminal or a base station terminal to determine an available channel for transmitting and/or receiving a communication signal, comprising:
selecting a frequency group based on a priority of the frequency group, which is stored as an occupancy number and indicates the number of signals using a channel to obtain availability of the channel;
sequentially scanning channels, which are comprised by the selected frequency group according to priority of the channels of the selected frequency group;
determining availability of a channel within the frequency group for receiving or transmitting signals;
selecting the available channel having the highest priority;
performing communication through the selected channel when available, wherein occupancy number of each channel is accumulated for determining the priority of each channel for receiving and transmitting signals,
**characterized in that**, if the occupancy number of the channel that has been scanned reaches an upper limit value, the occupancy number of the corresponding channel is reduced by a predetermined ratio, and the priority of the channels is updated.

18. The method of claim 17, wherein the priority of the frequency group is determined by selection of the channels having as highest priority in the frequency group.

19. The method of claim 17, wherein the occupancy number or frequencies of the channels determines the priority with which the channels receive or transmit signals.

20. The method of claim 17, wherein the channels are spaced apart at 5 MHz intervals.

21. The method of claim 17, wherein the priority of the frequency groups and the channels is set by:
accumulating the occupancy number of each channel; and
updating the priority of a frequency group according to the occupancy number of the channels.

22. A mobile communication device for managing messages received from and transmitted to another user by a user of the mobile communication device, the mobile communication device comprising:
an RF module which includes a transmitter to send the transmitter messages from a user and a receiver for receiving messages from another user; and
a processing unit comprising the apparatus for scanning channels according to any one of claims 1 to 16 and electrically coupled to the RF module.

23. The mobile communication device of claim 22, further including a storage unit and wherein the processing unit and storage unit are adapted to store the received messages in a first storage area, and the transmitted messages in a second storage area separate from the first storage area.

24. The mobile communication device of claim 22 or 23, wherein the processing unit comprises a microprocessor

25. The mobile communication device of any one of claims 22 to 24, wherein the frequency group comprises allocated channels, and the occupancy number of each channel is accumulated.

26. The mobile communication device of any one of claims 22 to 25, wherein the priority of the frequency group is determined by selecting the channels having the highest priority in each group, and comparing the channels that have been selected.

27. The mobile communication device of any one of claims 22 to 26, wherein the priority of the channels is determined by the occupancy numbers or frequencies of the channels.

28. The mobile communication device of any one of claims 22 to 27, wherein priority of the frequency groups and the channels is set by:
accumulating and storing the occupancy number of the channel; and
updating and storing the priority of the frequency group according to the occupancy number of the channel.

29. A network for radio communication with a terminal in a mobile communication system, the network comprising:
at least one transmitter adapted to transmit a plurality of packet data to a terminal using assigned power levels;
at least one receiver adapted to receive an acknowledgement signal from the terminal the acknowledgment signal indicating whether the transmitted packet data was correctly received; and
a controller comprising the apparatus for scanning channels according to any one of claims 1 to 16.

30. The network of claim 29, wherein the controller is further adapted to determine a corresponding power level for each of the plurality of packet data based on one of a channel state and a system state.

31. The network of claim 29 or 30, wherein the frequency group is formed by arranging the channels allocated to the system, and the occupancy number of each channel is accumulated.

32. The network of any one of claims 29 to 31, wherein the priority of the frequency group is determined by selecting the channels having the highest priority in each group, and .comparing the channels that have been selected for determining availability to receive or to transmit signals.

33. The network of any one of claims 29 to 31, wherein the priority of the channels is determined according to the occupancy numbers or frequencies of the channels.

34. The network of any one of claims 30 to 33, wherein the priority of the frequency groups and the channels is set by:
accumulating and storing the occupancy number of the channel; and
updating and storing the priority for each frequency group according to the occupancy number of the channel.

## Patentansprüche

1. Vorrichtung zum Absuchen von Kanälen in einem mobilen Kommunikationssystem auf Basis einer Priorität, die mit einer Belegungszahl zusammenhängt, welche die Anzahl der einen Kanal nutzenden Signale angibt, um die Verfügbarkeit des Kanals zu bestimmen, umfassend:
eine Basisbandeinheit (100) zum Verarbeiten eines Signals;
eine Tabelleneinheit (120), die mit der Basisbandeinheit elektrisch gekoppelt ist, um eine Tabelle der Kanäle zu erzeugen, die die Belegungszahl in der Tabelle der Kanäle speichert und die Priorität für die Belegung eines Kanals mit dem Signal festlegt; und
eine Steuereinheit (110), die mit der Tabelleneinheit elektrisch gekoppelt ist, um die Tabelle der Kanäle nach Maßgabe der Belegungszahl zu durchsuchen und einen Kanal mit der Belegungszahl der höchsten Priorität zum Empfangen oder Senden eines Signals auszuwählen,
**dadurch gekennzeichnet, dass** dann, wenn die Belegungszahl des abgesuchten Kanals einen oberen Grenzwert erreicht, die Steuereinheit die Belegungszahl des entsprechenden in der Tabelleneinheit gespeicherten Kanals in einem vorgegebenen Verhältnis verringert und die Priorität der Kanäle aktualisiert.

2. Vorrichtung nach Anspruch 1, die ferner eine Hochfrequenzeinheit (130) aufweist, die mit der Steuereinheit elektrisch gekoppelt ist, um Kommunikationssignale über den Kanal mit der höchsten Priorität zu senden oder zu empfangen.

3. Vorrichtung nach Anspruch 1 oder 2, wobei die Kanäle WCDMA-Kanäle (WCDMA: Breitband-Codemultiplexzugriff) sind.

4. Vorrichtung nach einem der Ansprüche 1 bis 3, wobei die Tabelle der Kanäle die Belegungszahl für gesendete und empfangene Signale aufzeichnet und speichert.

5. Vorrichtung nach einem der Ansprüche 1 bis 4, die ferner ein mobiles Endgerät enthält, das mit der Basisbandeinheit elektrisch gekoppelt ist und mit dem ein Benutzer eine Datenkommunikation anfordern kann.

6. Vorrichtung nach einem der Ansprüche 1 bis 5, wobei die Tabelle der Kanäle vom höchst belegten Kanal zum niedrigst belegten Kanal angeordnet ist, wobei die Anordnung der Kanäle die Priorität festlegt, nach der die Kanäle Kommunikationssignale empfangen und senden.

7. Vorrichtung nach einem der Ansprüche 1 bis 6, wobei die Steuereinheit die Belegungszahl für jeden Kanal akkumuliert, um die Priorität jedes Kanals zum Empfangen oder Senden von Kommunikationssignalen zu bestimmen.

8. Vorrichtung nach einem der Ansprüche 1 bis 7, wobei die Steuereinheit die Akkumulation der Belegungszahlen der Kanäle verringert, wenn der Kanal mit der höchsten Priorität einen auf der Basis der Kapazität des Kanals vorgegebenen oberen Grenzwert erreicht.

9. Vorrichtung nach einem der Ansprüche 1 bis 8, wobei die Tabelleneinheit eine Frequenzgruppe mit Kanälen bildet und die Belegungszahl der Kanäle der Frequenzgruppe akkumuliert und speichert.

10. Vorrichtung nach einem der Ansprüche 1 bis 9, wobei die Kanäle in intervallen von 5 MHz angeordnet sind.

11. Vorrichtung nach einem der Ansprüche 1 bis 10, wobei die Tabelleneinheit die Priorität einer Frequenzgruppe speichert und wobei die Steuereinheit bei Belegung eines Kanals in der Frequenzgruppe die Priorität der gewählten Frequenzgruppe aktualisiert.

12. Vorrichtung nach Anspruch 11, wobei die Steuereinheit Daten von der Tabelleneinheit empfängt, die Frequenzgruppe mit der höchsten Priorität auswählt und die Kanäle der gewählten Frequenzgruppe absucht, um die Verfügbarkeit zum Senden oder Empfangen von Signalen zu bestimmen.

13. Vorrichtung nach einem der Ansprüche 1 bis 12, wobei die Kanäle entsprechend der Priorität zum Empfangen oder Senden von Signalen abgesucht werden.

14. Vorrichtung nach einem der Ansprüche 1 bis 13, wobei die Priorität gemäß der Belegungszahl oder den Frequenzen des Kanals bestimmt wird.

15. Vorrichtung nach einem der Ansprüche 1 bis 14, die ferner eine Hochfrequenzeinheit enthält, die mit der Steuereinheit elektrisch gekoppelt ist, wobei die Steuereinheit den Betriebszustand des abgesuchten Kanals bestätigt, den Kanal zur Belegung auf Basis seiner Verfügbarkeit auswählt und die von der Hochfrequenzeinheit empfangenen oder gesendeten Signale steuert.

16. Vorrichtung nach einem der Ansprüche 1 bis 15, wobei die Steuereinheit die Belegungszahl der Kanäle akkumuliert, die Belegungszahlen in der Tabelleneinheit speichert, den Kanal auswählt und die zur Belegungszahl oder einer Frequenzgruppe des gewählten Kanals gehörige Priorität aktualisiert.

17. Verfahren für ein mobiles Kommunikationssystem zum Absuchen von Kanälen in einem mobilen Endgerät oder einem Basisstationsendgerät, um einen verfügbaren Kanal zum Senden und/oder Empfangen eines Kommunikationssignals zu bestimmen, aufweisend:
Wählen einer Frequenzgruppe auf Basis einer Priorität der Frequenzgruppe, die als Belegungszahl gespeichert ist und die Anzahl der Signale angibt, welche einen Kanal nutzen, um die Verfügbarkeit des Kanals zu erhalten;
sequentielles Absuchen der Kanäle, die in der gewählten Frequenzgruppe enthalten sind, gemäß der Priorität der Kanäle der gewählten Frequenzgruppe;
Bestimmen der Verfügbarkeit eines Kanals innerhalb der Frequenzgruppe zum Empfangen oder Senden von Signalen;
Wählen des verfügbaren Kanals mit der höchsten Priorität;
Ausführen einer Kommunikation über den gewählten Kanal, soweit dieser verfügbar ist, wobei die Belegungszahl jedes Kanals akkumuliert wird, um die Priorität jedes Kanals zum Empfangen und Senden von Signal zu bestimmen,
**dadurch gekennzeichnet, dass** dann, wenn die Belegungszahl des abgesuchten Kanals einen oberen Grenzwert erreicht, die Belegungszahl des entsprechenden Kanals in einem vorgegebenen Verhältnis verringert wird und die Priorität der Kanäle aktualisiert wird.

18. Verfahren nach Anspruch 17, wobei die Priorität der Frequenzgruppe durch Auswahl der Kanäle mit der höchsten Priorität in der Frequenzgruppe bestimmt wird.

19. Verfahren nach Anspruch 17, wobei die Belegungszahl oder die Frequenzen der Kanäle die Priorität bestimmt bzw. bestimmen, mit der die Kanäle Signale empfangen oder senden.

20. Verfahren nach Anspruch 17, wobei die Kanäle in Intervallen von 5 MHz beabstandet sind.

21. Verfahren nach Anspruch 17, wobei die Priorität der Frequenzgruppen und der Kanäle festgelegt wird durch:
Akkumulieren der Belegungszahl jedes Kanals; und
Aktualisieren der Priorität einer Frequenzgruppe gemäß der Belegungszahl der Kanäle.

22. Mobiles Kommunikationsgerät zum Verwalten von Nachrichten, die von einem anderen Benutzer empfangen oder an diesen vom Benutzer des mobilen Kommunikationsgeräts gesendet werden, wobei das mobile Kommunikationsgerät umfasst:
ein HF-Modul, das einen Sender zum Senden der von einem Benutzer gesendeten Nachrichten und einen Empfänger zum Empfangen der von einem anderen Benutzer gesendeten Nachrichten aufweist, und eine Verarbeitungseinheit, die die Vorrichtung zum Absuchen von Kanälen nach einem der Ansprüche 1 bis 16 aufweist und mit dem HF-Modul elektrisch gekoppelt ist.

23. Mobiles Kommunikationsgerät nach Anspruch 22, das ferner eine Speichereinheit aufweist und bei dem die Verarbeitungseinheit und die Speichereinheit dazu eingerichtet sind, die empfangenen Nachrichten in einem ersten Speicherbereich und die gesendeten Nachrichten in einem vom ersten Speicherbereich getrennten zweiten Speicherbereich zu speichern.

24. Mobiles Kommunikationsgerät nach Anspruch 22 oder 23, wobei die Verarbeitungseinheit einen Mikroprozessor umfasst.

25. Mobiles Kommunikationsgerät nach einem der Ansprüche 22 bis 24, wobei die Frequenzgruppe zugewiesene Kanäle enthält und die Belegungszahl jedes Kanals akkumuliert wird.

26. Mobiles Kommunikationsgerät nach einem der Ansprüche 22 bis 25, wobei die Priorität der Frequenzgruppe bestimmt wird, indem die Kanäle mit der höchsten Priorität in jeder Gruppe gewählt und die gewählten Kanäle verglichen werden.

27. Mobiles Kommunikationsgerät nach einem der Ansprüche 22 bis 26, wobei die Priorität der Kanäle durch die Belegungszahlen oder Frequenzen der Kanäle bestimmt wird.

28. Mobiles Kommunikationsgerät nach einem der Ansprüche 22 bis 27, wobei die Priorität der Frequenzgruppen und der Kanäle festgelegt wird durch:
Akkumulieren und Speichern der Belegungszahl des Kanals; und
Aktualisieren und Speichern der Priorität der Frequenzgruppe gemäß der Belegungszahl des Kanals.

29. Netzwerk für die Funkkommunikation mit einem Endgerät in einem mobilen Kommunikationssystem, wobei das Netzwerk umfasst:
mindestens einen Sender, der zum Senden einer Mehrzahl Paketdaten mit zugeordneten Leistungspegeln an ein Endgerät eingerichtet ist;
mindestens einen Empfänger, der zum Empfangen eines Quittierungssignals vom Endgerät eingerichtet ist, wobei das Quittierungssignal angibt, ob die gesendeten Paketdaten korrekt empfangen wurden; und
eine Steuerung, die die Vorrichtung zum Absuchen von Kanälen nach einem der Ansprüche 1 bis 16 aufweist.

30. Netzwerk nach Anspruch 29, wobei die Steuerung ferner dazu eingerichtet ist, für die mehreren Paketdaten jeweils einen entsprechenden Leistungspegel auf Basis eines Kanalzustands oder eines Systemszustands zu bestimmen.

31. Netzwerk nach Anspruch 29 oder 30, wobei die Frequenzgruppe durch Anordnen der dem System zugewiesenen Kanäle gebildet und die Belegungszahl jedes Kanals akkumuliert wird.

32. Netzwerk nach einem der Ansprüche 29 bis 31, wobei die Priorität der Frequenzgruppe bestimmt wird, indem die Kanäle mit der höchsten Priorität in jeder Gruppe gewählt und die gewählten Kanäle verglichen werden, um die Verfügbarkeit zum Empfangen oder Senden von Signalen zu bestimmen.

33. Netzwerk nach einem der Ansprüche 29 bis 31, wobei die Priorität der Kanäle gemäß den Belegungszahlen oder Frequenzen der Kanäle bestimmt wird.

34. Netzwerk nach einem der Ansprüche 30 bis 33, wobei die Priorität der Frequenzgruppen und der Kanäle festgelegt wird durch:
Akkumulieren und Speichern der Belegungszahl des Kanals; und
Aktualisieren und Speichern der Priorität der Frequenzgruppe gemäß der Belegungszahl des Kanals.

## Revendications

1. Appareil pour balayer des canaux dans un système de communication mobile sur la base d'une priorité associée à un nombre d'occupation indiquant le nombre de signaux utilisant un canal pour déterminer la disponibilité du canal, comprenant :
une unité de bande de base (100) pour traiter un signal ;
une unité de table (120) couplée électriquement à l'unité de bande de base pour créer une table de canaux, qui stocke un nombre d'occupation dans la table de canaux, et établit une priorité pour occuper un canal avec le signal ; et
une unité de commande (110) couplée électriquement à l'unité de table pour balayer la table de canaux en fonction du nombre d'occupation et sélectionner un canal ayant le nombre d'occupation avec une priorité la plus haute pour recevoir ou transmettre un signal,
**caractérisé en ce que**, si le nombre d'occupation du canal qui a été balayé atteint une valeur limite supérieure, l'unité de commande réduit d'un rapport prédéterminé le nombre d'occupation du canal correspondant stocké dans l'unité de table et met à jour la priorité des canaux.

2. Appareil selon la revendication 1, comprenant en outre une unité de fréquences radio (130) couplée électriquement à l'unité de commande pour transmettre ou recevoir des signaux de communication par l'intermédiaire du canal ayant la priorité la plus haute.

3. Appareil selon la revendication 1 ou 2, dans lequel les canaux sont des canaux d'accès multiple à répartition en code à large bande (WCDMA).

4. Appareil selon l'une quelconque des revendications 1 à 3, dans lequel la table de canaux enregistre et stocke le nombre d'occupation pour les signaux transmis ou reçus.

5. Appareil selon l'une quelconque des revendications 1 à 4, incluant en outre un terminal mobile couplé électriquement à l'unité de bande de base adapté pour qu'un utilisateur demande une communication de données.

6. Appareil selon l'une quelconque des revendications 1 à 5, dans lequel la table de canaux est agencée d'un canal le plus occupé à un canal le moins occupé, lequel agencement des canaux établit la priorité, selon laquelle les canaux reçoivent et transmettent des signaux de communication.

7. Appareil selon l'une quelconque des revendications 1 à 6, dans lequel l'unité de commande accumule le nombre d'occupation de chaque canal pour déterminer la priorité de chaque canal pour recevoir ou pour transmettre des signaux de communication.

8. Appareil selon l'une quelconque des revendications 1 à 7, dans lequel l'unité de commande réduit l'accumulation des nombres d'occupation des canaux lorsque le canal ayant la priorité la plus haute atteint une valeur limite supérieure prédéterminée basée sur la capacité du canal.

9. Appareil selon l'une quelconque des revendications 1 à 8, dans lequel l'unité de table forme un groupe de fréquences ayant des canaux et accumule et stocke le nombre d'occupation des canaux du groupe de fréquences.

10. Appareil selon l'une quelconque des revendications 1 à 9, dans lequel les canaux sont agencés à intervalles de 5 MHz.

11. Appareil selon l'une quelconque des revendications 1 à 10, dans lequel l'unité de table stocke la priorité d'un groupe de fréquences, et à l'occupation d'un canal au sein du groupe de fréquences, l'unité de commande met à jour la priorité du groupe de fréquences sélectionné.

12. Appareil selon la revendication 11, dans lequel l'unité de commande reçoit des données de l'unité de table, sélectionne le groupe de fréquences ayant la priorité la plus haute et balaye les canaux du groupe de fréquences sélectionné, déterminant la disponibilité pour transmettre ou recevoir des signaux.

13. Appareil selon l'une quelconque des revendications 1 à 12, dans lequel les canaux sont balayés en fonction de la priorité pour recevoir ou transmettre des signaux.

14. Appareil selon l'une quelconque des revendications 1 à 13, dans lequel la priorité est déterminée en fonction du nombre d'occupation ou des fréquences du canal.

15. Appareil selon l'une quelconque des revendications 1 à 14, incluant en outre une unité de fréquences radio couplée électriquement à l'unité de commande, dans lequel l'unité de commande confirme un état opérationnel du canal balayé, sélectionne le canal pour l'occuper sur la base de sa disponibilité et commande les signaux reçus ou transmis par l'unité de fréquences radio.

16. Appareil selon l'une quelconque des revendications 1 à 15, dans lequel l'unité de commande accumule le nombre d'occupation des canaux, stocke les nombres d'occupation dans l'unité de table, sélectionne le canal et met à jour la priorité associée avec le nombre d'occupation ou un groupe de fréquences du canal sélectionné.

17. Procédé pour un système de communication mobile pour balayer des canaux dans un terminal mobile ou un terminal de station de base pour déterminer un canal disponible pour transmettre et/ou recevoir un signai de communication, comprenant :
la sélection d'un groupe de fréquences sur la base d'une priorité du groupe de fréquences qui est stockée comme un nombre d'occupation et indique le nombre de signaux utilisant un canal pour obtenir la disponibilité du canal ;
le balayage séquentiel de canaux qui sont compris par le groupe de fréquences sélectionné en fonction de la priorité des canaux du groupe de fréquences sélectionné ;
la détermination de la disponibilité d'un canal au sein du groupe de fréquences pour recevoir ou transmettre des signaux ;
la sélection du canal disponible ayant la priorité la plus haute ;
la réalisation de la communication par l'intermédiaire du canal sélectionné lorsqu'il est disponible ;
dans lequel le nombre d'occupation de chaque canal est accumulé pour déterminer la priorité de chaque canal pour recevoir et transmettre des signaux,
**caractérisé en ce que**, si le nombre d'occupation du canal qui a été balayé atteint une valeur limite supérieure, le nombre d'occupation du canal correspondant est réduit d'un rapport prédéterminé la priorité des canaux est mise à jour.

18. Procédé selon la revendication 17, dans lequel la priorité du groupe de fréquences est déterminée par sélection des canaux ayant une priorité la plus haute dans le groupe de fréquences.

19. Procédé selon la revendication 17, dans lequel le nombre d'occupation ou les fréquences des canaux déterminent la priorité avec laquelle les canaux reçoivent ou transmettent des signaux.

20. Procédé selon la revendication 17, dans lequel les canaux sont espacés à intervalles de 5 MHz.

21. Procédé selon la revendication 17, dans lequel la priorité des groupes de fréquences et des canaux est fixée par :
l'accumulation du nombre d'occupation de chaque canal ; et
la mise à jour de la priorité d'un groupe de fréquences en fonction du nombre d'occupation des canaux.

22. Dispositif de communication mobile pour gérer des messages reçus d'un et transmis à un autre utilisateur par un utilisateur du dispositif de communication mobile, le dispositif de communication mobile comprenant
un module RF qui inclut un émetteur pour envoyer les messages transmis d'un utilisateur et un récepteur pour recevoir des messages d'un autre utilisateur ; et
une unité de traitement comprenant l'appareil pour balayer des canaux selon l'une quelconque des revendications 1 à 16 et couplée électriquement au module RF.

23. Dispositif de communication mobile selon la revendication 22, incluant en outre une unité de stockage et dans lequel l'unité de traitement et l'unité de stockage sont adaptées pour stocker les messages reçus dans une première zone de stockage et les messages transmis dans une deuxième zone de stockage séparée de la première zone de stockage.

24. Dispositif de communication mobile selon la revendication 22 ou 23, dans lequel l'unité de traitement comprend un microprocesseur.

25. Dispositif de communication mobile selon l'une quelconque des revendications 22 à 24, dans lequel le groupe de fréquences comprend des canaux attribués et le nombre d'occupation de chaque canal est accumulé.

26. Dispositif de communication mobile selon l'une quelconque des revendications 22 à 25, dans lequel la priorité du groupe de fréquences est déterminée par la sélection des canaux ayant la priorité la plus haute dans chaque groupe, et par la comparaison des canaux qui ont été sélectionnés.

27. Dispositif de communication mobile selon l'une quelconque des revendications 22 à 26, dans lequel la priorité des canaux est déterminée par les nombres d'occupation ou les fréquences des canaux.

28. Dispositif de communication mobile selon l'une quelconque des revendications 22 à 27, dans lequel la priorité des groupes de fréquences et des canaux est fixée par :
l'accumulation et le stockage du nombre d'occupation du canal ; et
la mise à jour et le stockage de la priorité du groupe de fréquences en fonction du nombre d'occupation du canal.

29. Réseau pour une communication radio avec un terminal dans un système de communication mobile, le réseau comprenant :
au moins un émetteur adapté pour transmettre une pluralité de données par paquets à un terminal en utilisant des niveaux de puissance assignés ;
au moins un récepteur adapté pour recevoir un signal d'accusé de réception du terminal, le signal d'accusé de réception indiquant si les données par paquets transmises ont été correctement reçues ; et
un contrôleur comprenant l'appareil pour balayer des canaux selon l'une quelconque des revendications 1 à 16.

30. Réseau selon la revendication 29, dans lequel le contrôleur est en outre adapté pour déterminer un niveau de puissance correspondant pour chacune de la pluralité de données par paquets sur la base de l'un d'un état du canal et d'un état du système.

31. Réseau selon la revendication 29 ou 30, dans lequel le groupe de fréquences est formé en agençant les canaux attribués au système, et le nombre d'occupation de chaque canal est accumulé.

32. Réseau selon l'une quelconque des revendications 29 à 31, dans lequel la priorité du groupe de fréquences est déterminée par la sélection des canaux ayant la priorité la plus haute dans chaque groupe, et par la comparaison des canaux qui ont été sélectionnés pour déterminer la disponibilité pour recevoir ou pour transmettre des signaux.

33. Réseau selon l'une quelconque des revendications 29 à 31, dans lequel la priorité des canaux est déterminée en fonction des nombres d'occupation ou des fréquences des canaux.

34. Réseau selon l'une quelconque des revendications 30 à 33, dans lequel la priorité des groupes de fréquences et des canaux est fixée par :
l'accumulation et le stockage du nombre d'occupation du canal ; et
la mise à jour et le stockage de la priorité pour chaque groupe de fréquences en fonction du nombre d'occupation du canal.
